(19) Europäisches Patentamt

European Patent Office

Office européen des brevets

(11) **EP 4 164 172 A1**

(12) **EUROPEAN PATENT APPLICATION**

(43) Date of publication:
**12.04.2023 Bulletin 2023/15**

(21) Application number: **21382895.7**

(22) Date of filing: **05.10.2021**

(51) International Patent Classification (IPC):
***H04L 9/00*** *(2006.01)*

(52) Cooperative Patent Classification (CPC):
**H04L 9/008**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefonica Digital España, S.L.U.**
**28013 Madrid (ES)**

(72) Inventors:
• **PAPADOPOULOS, Panagiotis**
  **28013 Madrid (ES)**
• **ARAPAKIS, Ioannis**
  **28013 Madrid (ES)**
• **KATEVAS, Kleomenis**
  **28013 Madrid (ES)**

(74) Representative: **Herrero & Asociados, S.L.**
**Cedaceros, 1**
**28014 Madrid (ES)**

(54) **PRIVACY PRESERVING PEER-TO-PEER MACHINE LEARNING**

(57) A method and system for providing privacy preserving peer-to-peer ML for users to participate in a collaborative learning scheme. The provided peer-to-peer learning solution does not require any sort of centralized infrastructure and enables users to benefit from the wealth of user data that are distributed across the participating devices while maintaining accurate personalized models. In the proposed approach, users (through their electronic user devices) train an improved global ML model without the need for federation; instead, they train models locally and organize small synergies, where they perform federated averaging on their model's parameters via a homomorphic based protocol.

FIG. 2

**Description**

**TECHNICAL FIELD**

The present invention has its application within the information and communications technologies, more specifically, relates to machine learning (ML) techniques and more particularly, to a method and a system to enhance performance of current ML techniques in preserving the privacy of user's data, while achieving accurate ML models.

**BACKGROUND OF THE INVENTION**

When using ML techniques, it is important to be able to build machine-learning models in a manner that preserves the privacy of data used to build said models. The privacy preserving ML techniques provide guarantees on how much information an attacker can learn about the data used to train these models, as well as the structure of the models themselves.

Nowadays, mobile devices collect very large volumes of what is considered to be privacy sensitive user data (e.g., by monitoring their sensors outputs, user's behavior, user's apps etc.). This huge amount of data can be used to provide customized services to the mobile device users or for many other purposes; however, when using or processing these, data privacy must be preserved at the same time. To improve data privacy, federated learning (also called collaborative learning) was developed.

Federated Learning (FL) is a natural evolution of ML methods. FL enables local training on user's mobile devices, avoiding user data to be transferred to centralized servers. FL enables users to train ML algorithms (also called ML models) based on their (sensitive) personal data behind the fortified walls of their very own devices. Although, with FL, users do not reveal their personal data, since they only share the model parameters (e.g. weights), such parameters can also leak sensitive information about the users, and adversaries can execute relevant attacks like data reconstruction, membership inference attack, etc. The state-of-the-art approach that FL uses to guarantee the user's privacy from such attacks is differential privacy, an approach that also results in a utility and performance loss. Although FL provides better privacy guarantees (compared to the traditional centralized learning approach), FL needs some sort of centralized management and orchestration (or federation) of the participating peers, thus requiring from the users to blindly trust a centralized infrastructure that constitutes a single point of failure and may also become a bottleneck with the increasing number of users.

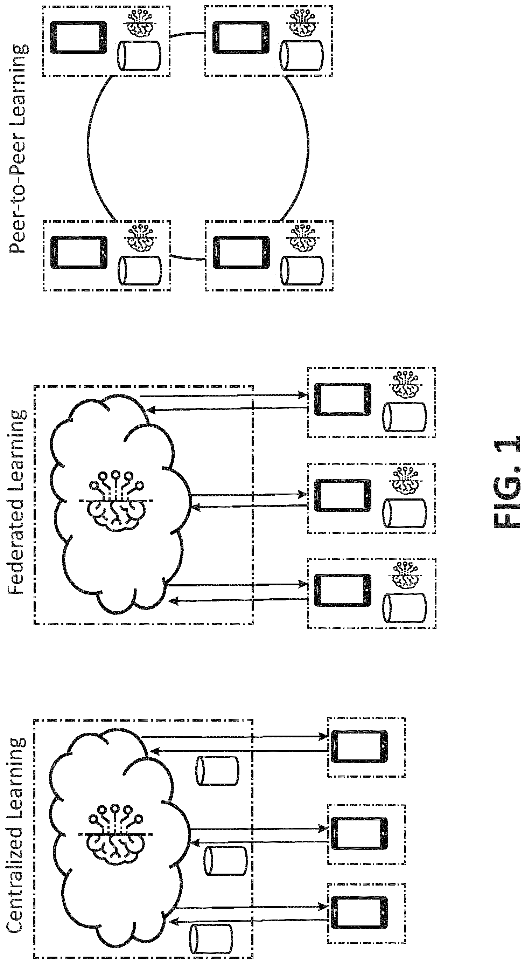

That is, in the past, for implementing ML techniques, users' devices used to connect with a remote centralized server that performed all the computationally expensive ML computations (Centralized Learning, left in Figure 1). User data were usually transferred, stored and processed in the cloud, and the user endpoints could later fetch the results via API (Application Programming Interface) calls. Albeit the apparent poor performance of such strategy, it also raises significant privacy concerns, especially considering the huge volume of the multidimensional and privacy-sensitive user data the modern mobile and IoT (Internet of Things) devices collect nowadays. Such performance and privacy concerns called for more decentralized schemes where data would remain on user devices. In the era of edge computing the computations and data have been brought much closer to the location where they are needed: the users' very own devices. Text predictors, ad recommendation engines, personal photo classifiers, health and wellness recommenders are only but a few examples of applications that leverage the wealth of sensitive user data that modern devices produce and maintain locally, to provide useful personalized services to users. But training models in isolation, based only on local data, can result in weak models if peers have very little data or models that generalize very poorly.

To mitigate this limitation, the distributed ML paradigm of Federated Learning (FL) came to enable mobile devices to produce an ML model without sharing any user data (Federated Learning, middle in Figure 1). Instead, in FL, users selectively share small subsets of their models' key parameters during training. To protect the users' shared key parameters from inference attacks, the use of special hardware on the centralized server or the application of differential privacy (DP) is required, thus introducing a privacy-to-utility trade-off. FL also requires the coordination of a central server that orchestrates the training, the client selection, the updates collection, and weights aggregation. This server constitutes a centralized authority that: (a) users are forced to blindly trust to protect them (with the use of DP) from various information leakage attacks (see for example, "Deep models under the GAN: Information leakage from collaborative deep learning by Briland Hitaj, Giuseppe Ateniese, and Fernando Perez-Cruz), where malicious participating clients can de-anonymize sensitive training data through observation and isolation of a victim's model updates; and (b) such centralized service is a single point of failure, which can become a bottleneck thus hindering the overall scalability and performance.

To avoid the drawback of the centralized infrastructure needed in FL, Peer-to-Peer Machine Learning was developed. Peer-to-Peer ML (right in Figure 1) can be seen as a decentralized FL where there is not a centralized server, but all the computations are performed by connected user's devices. However, previous peer-to-peer learning attempts either are vulnerable to inference attacks or use differential privacy (see for example "Personalized and private peer-to-peer machine learning" by Aurélien Bellet, Rachid Guerraoui, Mahsa Taziki, and Marc Tommasi), thus decreasing the utility of the shared parameters or heavily rely on very complex techniques as blockchain ledgers and interplanetary file system, IPFS (see for example "A framework for decentralized federated learning." by Christodoulos Pappas, Dimitris Chatzopoulos, Spyros Lalis, and Manolis Vavalis).

Therefore, there is a need for an improved ML based framework, which addresses the above stated challenges and drawbacks and fully prevents private information leakage.

## SUMMARY OF THE INVENTION

The problems found in prior art techniques are generally solved or circumvented, and technical advantages are generally achieved, by the disclosed embodiments which provide privacy preserving peer-to-peer machine learning (ML) methods and systems for users to participate in an asynchronous, collaborative learning scheme.

The provided peer-to-peer learning solution (called from now on P$^4$L) does not require any sort of infrastructure and enables users to benefit from the wealth of user data that are distributed across the participating devices, while maintaining accurate personalized models, and by using strong cryptographic primitives puts an end to the false dilemma: data utility vs. privacy.

In the proposed approach, users (through their electronic user devices) train a common (global) ML model without the need for federation; instead, they train models locally and organize small synergies, where they perform federated averaging on their model's parameters via a (partial) homomorphic based protocol. Thus, no peer (user device) can learn the parameters of the other peers, while at the same time there is no data utility loss.

In P$^4$L, it is utilized (partial) homomorphic encryption during federated averaging to preserve both the confidentiality and utility of the shared parameters, while at the same time information leakage attacks of malicious participants are prevented. It is not necessary to use performance-heavy fully homomorphic encryption that supports multipliable operations allowing more computation to be performed over encrypted data, but, for P$^4$L, it is sufficient a simpler homomorphic encryption (also known as partial or partially homomorphic encryption), which supports just one operation on confidential data: either addition or multiplication. This partial homomorphic encryption is very lightweight and suits the proposed solution without the necessity of a more complex and heavy type of homomorphic encryption.

In addition, P$^4$L leverages the proximity and cross-device communication existing capabilities of mobile devices (see for example Google Developers. Proximity and cross device communication. https:// developers.google.com/nearby, 2020), thus operating on completely infrastructure-less setups: no need for any centralized federation or Public Key Infrastructure (PKI).

This solution addresses a high-value problem for many telecommunications or technologic companies, since it can be deployed in any home/office users, as well as mobile telephone users; that is, the solution could be running on any company users' owned devices (e.g., mobile phones), as a native application within each participating phone, allowing to build ML models on the company users' data, without out-porting these data anywhere. The models are built locally, on-device, and thus they are privacy-preserving.

The invention relates to a method and a system as defined by the independent claims. The dependent claims define advantageous embodiments.

The invention also refers to a computer program product comprising computer program code adapted to perform the methods of the invention, when said program code is executed on a computer, a digital signal processor, a field-programmable gate array, an application-specific integrated circuit, a micro-processor, a micro-controller, or any other form of programmable hardware. A non-transitory digital data storage medium is also provided for storing a computer program which comprises instructions causing a computer executing the program to perform the above-described method.

## BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 shows a schematic diagram of different ML paradigms: Centralized Learning (left), Federated Learning (middle) and Peer-to-Peer Learning (right).

Figure 2 shows a high-level overview of the workflow between users, for a 3-members synergy, according to one embodiment in the present invention.

Figure 3 shows a high-level overview of the workflow between users, for a 3-members synergy in a specific example (using a P⁴L prototype), according to one embodiment in the present invention.

## DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments of the present invention propose a peer-to-peer ML training in an attempt to convergence to an optimal global ML model, where peer training data (the training data used by each participant device to train its local model) is kept private but without harming the utility of the data (as it happens in prior art solutions, for example, by introducing noise as part of the differential privacy guarantee), while potential information leakage attacks on training data are prevented.

Now, the proposed solution (P⁴L) will be explained. As an example, it is assumed that the problem to be solved with ML techniques (the ML problem) is an image classification problem, where users use an application that includes a basic model for automatically grouping photos into groups. Users initially label a small set of photos to help the image classification application retrain and personalize its basic ML model. This application utilizes P⁴L to enable users collaboratively to build an improved ML global model for this classification problem. Thus, the app runs on the background and in parallel with user's daily activities (i.e., while they socialize or when they co-locate with other people) forms small peer-to-peer groups (called synergies or synergy groups) where peers perform private aggregation of its parameters (that is, the synergy group is the group of users which, via an anonymous and privacy-preserving exchange of model parameters, e.g. weights, they update and improve their individual models in a collective fashion). This is only a non-limitative example, and the proposed solution (P⁴L) can be applied in any other type of application (app), or any type of ML Problem (any other type of scenario where ML models are used).

Applications (apps) can request ML-modelling support (to solve any type of problems) while executed on mobile devices, or IoT and home devices like personal assistants and smart TVs or any other type of electronic devices. The user devices (peers) where the embodiments of the invention are performed, may be any type of electronic devices such as mobile devices (mobile phones, smartphones, laptops, tablets, etc.), IoT devices, Smart TVs, Personal Computers (PCs), etc or any other electronic device with processing capabilities. The user devices (peers) communicate between them, through one or more (tele)communications networks of any type (local area networks, wide area networks, mobile communications networks 2G, 3G, 4G, 5G, etc.).

For a better understanding of the following explanation, a summary of the notation used, with the meaning of each symbol, will be presented in the following table:

Table1

| Notatio n | Meaning |
| --- | --- |
| $U$ | Total number of users (user devices) |
| $S$ | Max number of synergy participants requested by initiator |
| $pk_i$ | Public key of peer i |
| $sk_i$ | Private (secret) key of peer i |
| $W_{ij}$ | jth weight of peer i |
| $i_{addr}$ | The network address of the peer i |
| $L$ | A list that includes the network addresses of the participating peers |
| $\in$ | Transmitted message from one peer to another |
| $Res$ | Decrypted result ( in plaintext) |
| $\Pi_{Res}$ | Proof of correct decryption for Res |

A user A (or more specifically, a user device A) which is the group initiator (i.e., the synergy group initiator) uses a local model $M_A$ of the model M, trained on user device A local data (using the above example, user device A is running an application for image classification, and for the initial training the user provided some initiate labels based on its personal data). The (initial) local model of each user device may be trained and built using local data of each user device.

As it will be explained now, the initiator (user device A) bootstraps a group of users (synergy group) where participants collaboratively perform private aggregation of their own ML local models via homomorphic encryption.

In an embodiment, before starting the procedure itself (in step 0, before starting sending anything to the other peer), the user device as part of the proposed P4L: (i) creates and stores locally an asymmetric key-pair $(pk_A, sk_A)$, (ii) extracts the parameters (weights) $W_A$ of the local model $M_A$; being n the number of parameters of the model $M_A$:

$$W_A : [W_{A1}, W_{A2}, W_{A3}, \cdots, W_{An}]$$

and (iii) encrypts each one of them with the public key $pk_A$:

$$Enc(pk_A, W_A) : [Enc(pk_A, W_{A1}), Enc(pk_A, W_{A2}), \cdots, Enc(pk_A, W_{An})]$$

This user co-locates or socializes with *U* other users of this application (e.g., when user arrives at their office) who have their own personalized (local) version of the model M (see Table 1 for a summary of notation). In step 1, P4L on the background starts advertising its presence and discovering other peers (for example, nearby peers) running the same application or solving the same ML problem (in the example, an image classification problem).

For performing this discovery any known technique can be used: e.g., detecting several nearby user devices and choosing one of them (using some sort of criteria or randomly); or having a pre-defined ordered list of user devices and choosing the first user device in said list that is detected as being "on". These are only non-limitative examples, and any type of discovery mechanism or selection mechanism can be used.

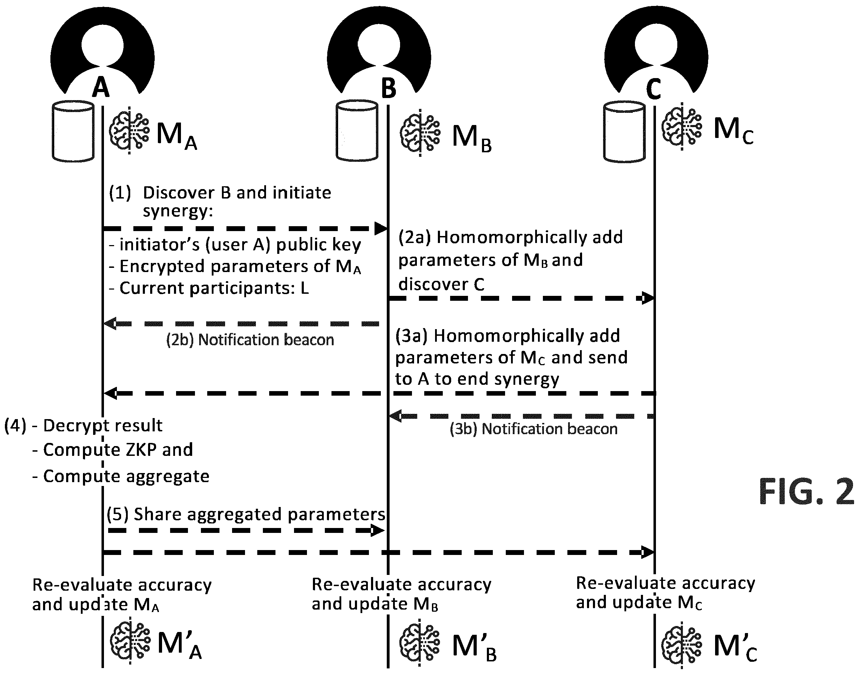

In this example, as soon as user B (peer B) is discovered, peer A bootstraps a synergy by transmitting a (signed with its private key $sk_A$) message $\epsilon$ (called synergy information message) that includes its public key $pk_A$, the encrypted parameters $Enc(pk_A, W_A)$ and, in an embodiment, it also includes an integer $S \le U$ where S denotes the maximum remaining synergy participants (in the case of figure 2, U=3 and S=2), a timestamp and a list of the current synergy participants L.

L includes an address of each current participant or in general, any identification parameter which allows to reach each user device participating in the synergy. In step 1 as there is only one participant, user device A, $L = \{A_{addr}\}$ where $A_{addr}$ is the address of user device A:

$$\epsilon = [pk_A, Enc(pk_A, W_A), S, L, timestamp]$$

So, in step 1 (1) the synergy initiator (user A) discovers another user device to take part in the synergy (user B) and initiates the synergy by sending to user device B a message ($\epsilon$) including his public key, the encrypted parameters of his ML model $M_A$ and the current list L of the participants.

In step 2, peer *B* receives $\epsilon$. Of course, peer *B* cannot decrypt (and thus learn) the encrypted weights of peer *A*, since they do not know A's private key but instead B encrypts and homomorphically adds their own weights to *A*'s ciphertext by using the public key of *A* (i.e., $pk_A$). More specifically, after receiving message $\epsilon$ (or in other embodiments before receiving it), *B* extracts the parameters (weights) $W_B$ of the local model $M_B$ (in this case, the number of parameters of the model $M_B$ is the same as the number of parameters of the model $M_A$, n):

$$W_B : [W_{B1}, W_{B2}, W_{B3}, \cdots, W_{Bn}]$$

And then user device B encrypts each parameter of $W_B$ with the public key of user A $pk_A$:

$$Enc(pk_A, W_B) : [Enc(pk_A, W_{B1}), Enc(pk_A, W_{B2}), \cdots, Enc(pk_A, W_{Bn})]$$

and homomorphically adds said encrypted parameters with the encrypted parameters of the local model of user A received in $\epsilon$, (that is, user B homomorphically adds the parameters $W_B$ of its own version of the model M, $M_B$, using the public key *of A* $pk_A$), resulting:

$$Enc(pk_A, W_A) + Enc(pk_A, W_B) = [Enc(pk_A, W_{A1}) + Enc(pk_A, W_{B1}), Enc(pk_A, W_{A2}) +$$

$$Enc(pk_A, W_{B2}), \cdots, Enc(pk_A, W_{An}) + Enc(pk_A, W_{Bn})]$$

which via the additive property of the homomorphic encryption, is equal to:

$$Enc(pk_A, W_A + W_B) = [Enc(pk_A, W_{A1} + W_{B1}), Enc(pk_A, W_{A2} +$$

$$W_{B2}), \cdots, Enc(pk_A, W_{An} + W_{Bn})]$$

Next, peer *B* decreases *S* by one and updates *L* with its address *L'* : {$A_{addr}$, $B_{addr}$}. Then, peer B forms an updated synergy information message $\in$ ($\in$') that includes the initiator's public key *pk_A*, the encrypted parameters *Enc(pk_A, W_A + W_B)*, an integer denoting the maximum remaining synergy participants (S-1), a timestamp and a list of the of the current synergy participants of the current synergy participants L'.

$$\epsilon' = [pk_A, Enc(pk_A, W_A + W_B), S - 1, L', timestamp']$$

Peer B discovers another user device to be part of the synergy, that is, another user device (preferably, running the same application or solving the same ML problem) as peer A did before. Of course, during peer discovery, any new peer that is already in the list of current participating peers is discarded (because the target is to discover a new participant). In this case, peer C (user C) is discovered and the updated message $\in$' (signed with its own private key *sk_B*) is sent to user device C through one or more communications networks.

In an embodiment, as soon as $\in$' is received by peer *C*, *B* sends a message (a beacon) to notify user device *A*. In another embodiment, this notification message is sent to user device A, as soon as $\in$' is transmitted to peer *C*

So, in step 2 (2a) user device B discovers another user device to take part in the synergy (user C) and sends to user device C, an updated synergy information message ($\in$') including user A public key, the encrypted parameters of his ML model $M_B$ homomorphically added to the parameters of $M_A$, the maximum number of remaining participants (S-1) and the current list (L') of the synergy participants. And 2b, user device B sends a message to user device A to notify that the message has been received by user device C).

Similarly, in step 3, 3a the peer C creates and stores locally an asymmetric key-pair *(pk_c, sk_c)* and extracts the parameters (weights) $W_c$ of its local model $M_c$ (assuming it has again n parameters):

$$W_C: [W_{C1}, W_{C2}, W_{C3}, \cdots, W_{Cn}]$$

When receiving message $\in$', user device C encrypts each parameter of Mc with the public key of user A *pk_A* and adds said encrypted parameters with the encrypted parameters of the local model of user A and B received in $\in$' (that is, user C homomorphically adds the parameters $W_c$ of its own version of the model M using the public key *of A pk_A*), resulting in:

$$Enc(pk_A, W_A) + Enc(pk_A, W_B) + Enc(pk_A, W_C) = [Enc(pk_A, W_{A1}) + Enc(pk_A, W_{B1}) +$$

$$Enc(pk_A, W_{C1}), Enc(pk_A, W_{A2}) + Enc(pk_A, W_{B2}) + Enc(pk_A, W_{C2}), \cdots, Enc(pk_A, W_{An}) +$$

$$Enc(pk_A, W_{Bn}) + Enc(pk_A, W_{Cn})]$$

which via its additive property is equal to:

$$Enc(pk_A, W_A + W_B + W_C) = [Enc(pk_A, W_{A1} + W_{B1} + W_{C1}), Enc(pk_A, W_{A2} + W_{B2} +$$

$$W_{C2}), \cdots, Enc(pk_A, W_{An} + W_{Bn} + W_{Cn})]$$

The peer C decreases the number of remaining participants (*S'*) by one and updates *L'* with its address *L"* : {$A_{addr}$, $B_{addr}$, $C_{addr}$}. If by decreasing *S'* by one this becomes zero (that is, the maximum number of participants is reached), it means that *C* was the last node to add its parameters, so it will not need to discover the next node to forward the synergy information message $\in$" but instead will send it to the first node in *L"* (i.e., $A_{addr}$). In this case, the signed

synergy information message $\epsilon''$ which is sent to the initiator's peer (A), may be simpler (because it is not needed to add the public key of A or the number of remaining participants).

$$\epsilon'' = [Enc(pk_A, W_A + W_B + W_C), L'', timestamp'']$$

In an embodiment, as soon as $\epsilon''$ is received by peer $A$, $C$ sends a notification message (3b) to notify user device B. In another embodiment, this notification message is sent to user device B, as soon as $\epsilon''$ is transmitted to peer $A$.

In an embodiment. the maximum number of remaining user devices participating in the synergy group is not included in the synergy information messages but is calculated by the user device receiving the synergy information message using information previously stored in the user device. For example, the maximum number of user devices in a synergy group may be a pre-established parameter stored in the user devices.

Here, the procedure has been shown for the given example where the number of participants in the synergy group is 3, but that this can be applied to any number of participants. For the synergy initiator, the process will be as explained for user device A. And then, for any other participant (let's say user device X), when it receives a synergy information message $\epsilon$ from another participant, if X it is not the last participant of the synergy (that is, if the number of remaining participants in the received message is >1), then user device X forms a message that includes the public key of the synergy initiator $(pk_A)$, the encrypted parameters of his local ML model homomorphically added to the encrypted parameters included in the received message, and optionally the number of remaining participants and the current list of the synergy participants, including itself. Then it sends this message (signed with its private key) to a new participant (that user device X has discovered). If it is the last participant of the synergy or a stop condition is fulfilled (as it will be explained later), then the peer sends the message back to the synergy initiator (without including the public key $(pk_A)$ and the number of remaining participants). Once the message is received by the next participant (or by the synergy initiator), a beacon message can be sent to the previous peer (the participant who sends the message to user device X).

In step 4 (4), the synergy initiation (peer $A$) receives the updated synergy information $\epsilon''$, learns the synergy participants from $L''$ and by using its private key $sk_A$ it decrypts the encrypted sum of parameters of the peers' local model, obtaining $Res = Dec\left(pk_A, W_A + W_B + W_C\right) = Dec\left(pk_A, \sum_{i=0}^{N-1} W_i\right) = \sum_{i=0}^{N-1} W_i$, where N is the number of synergy participants (in the specific case of figure 2, N=3, but this is only an example and the number of participants can be any other). In general, N <= (S+1), because in some cases the number of synergy participants may be less than the maximum number of participants. Then, the aggregated is computed as:

$$Aggr.Res = \frac{Res}{N} = \frac{\sum_{i=0}^{N-1} W_i}{N}$$

In an embodiment, then, the synergy initiator creates a ZKP (Zero Knowledge Proof) of correct decryption of the homomorphically encrypted data ($\Pi_{Res}$).

As a final step (5), peer A forwards (through one or more telecommunications networks) across all synergy participants in $L''$ the following message (in an embodiment, in plaintext, without encryption):

$$[Aggr.Res, \Pi_{Res}, timestamp]$$

This way, all the rest of the synergy participants can learn the aggregated parameters of all the local ML models. Thanks to the proof included in the message, anyone can verify that peer $A$ decrypted correctly the homomorphic cyphertext (the sum of parameters of local models), thus providing auditability to this final step of the procedure.

Then, every participant can update its local model with the aggregated parameters of all the participants resulting in an updated local model ($M'_A$, $M'_B$, $M'_C$). For example, each participant can take as parameters (weights) for its local model, the received aggregated parameters (of all the participants).

In an embodiment, after updating the local model, the accuracy of the updated local model on the local data of each participant device could be revaluated by each peer and the updated local model is used only is the accuracy is higher than with the previous local model. That is, if the accuracy of the updated model on the local data of a certain user device is lower than before, this user device discards the updates, and the previous local model ($M_A$, $M_B$, $M_C$) is maintained. If the accuracy of the updated model is higher than before, then the updated local model is used ($M'_A$, M'B, $M'_C$) in each peer.

For a better understanding of the explanation, in this example, it has been assumed only 1 synergy of just 3 participants. But, of course, the synergy can have any number of participants and a user may participate in various synergies of various sizes in parallel, either as a synergy initiator or a simple participant.

Now, some properties of the proposed peer-to-peer solution will be presented: <u>User Churn</u>: The dynamics of peer participation, or churn, are an inherent property of peer-to-peer systems and critical for its design and evaluation. $P^4L$ is designed to be a dynamic peer-to-peer system where users can join and exiting synergies without impeding the seamless operation of the synergy. $P^4L$ assumes mobile device users, this means that it is highly likely for users to frequently move in/out of range (and consequently, moving in/out of the synergy) during an ongoing synergy.

1. Arriving users: In $P^4L$, there is no initial, static selection of the synergy participants. Instead, every peer chooses the next participant, which means that any (e.g., nearby) peer may be selected to join the synergy at any time. This property allows $P^4L$ synergies to be formed on-the-fly and select a different topology in case of a failed (or out of range) participant.

2. Departing users: A participating peer may leave a synergy (connectivity loss, application/device failure) without forwarding its updated $\epsilon$ causing this way an interruption in the synergy's expected operation. For instance, in the above example, peer *B* may discover peer *C*, forward $\epsilon'$ and then peer *C* may go out of range.

In order, to avoid such cases of incomplete synergies, preferably, as described above, as soon as a peer successfully forwards its updated synergy information message to the next peer (next neighbour), it notifies the previous peer with a notification beacon. In an embodiment, the transmission would be considered successful, for example, if the transmitting peer receives an acknowledge message from the destination peer.

In an embodiment, there is a specified time window $t_p$ established for a peer to compute and forward its updated synergy information message to the next peer. Consequently, after $t_p$ time without receiving a notification beacon, the previous peer knows that the next peer to which it has sent the information dropped the synergy. Then, as a fail-over, the previous peer needs to select another neighbour to forward its updated synergy information message $\epsilon'$. In an embodiment, after R unsuccessful retries (*R* being a design parameter), and if the peer was not only the second participant in the synergy (synergy size should be > 2 to materialize), it will sent the updated $\epsilon'$ to the synergy's initiator so the synergy can end. In an embodiment, if a synergy initiator does not receive any response from a peer after time $t = t_p \times S$, the synergy is considered failed.

<u>Confidentiality of user model</u>: $P^4L$ protects against inference attacks by ensuring that no peer can learn the training data or the parameters of any individual synergy participant. Instead, only the aggregated averages are shared, meaning that the more participants in a synergy the harder it is for the curious eavesdropper to infer the parameters of the participants. Contrary to prior art works that utilize obfuscation-based techniques (e.g., differential privacy), $P^4L$ employs strong cryptographic primitives for the private aggregation of the user models' parameters. This allows $P^4L$ to introduce for example zero utility loss in the aggregated data, which helps the model propagation algorithm to converge fast.

It is important to note that the proposed solution does not impede the user experience (and more specifically the app's user experience) in any way, as the application that may perform this solution works in the background and can communicate with (nearby) peers without requiring any connection approval or user intervention.

To better explain and to assess the effectiveness of the proposed solution, a prototype of $P^4L$ has been developed. Said solution (an application) has been developed using the Android platform in Java. However this is only a non-limitative example, and any other platform and programming language could be used. Specifically, it is developed as a simple app that implements the basic operations of a peer when participating in a synergy: trains/updates a model locally, scans environment to discover peers, connects to them (using one or more telecommunications networks) to create a synergy, homomorphically adds and sends encrypted parameters, and finally decrypts the sum to perform the private aggregation.

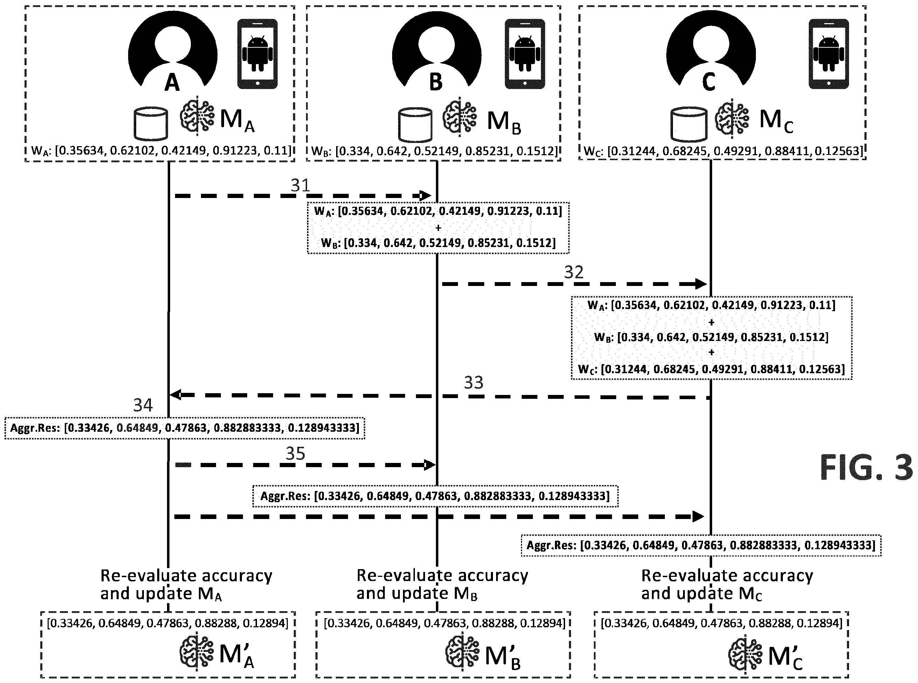

For a better understanding of the proposed solution, figure 3 shows an example of the workflow (with specific values) of the proposed private aggregation of the participants' model parameters, according to this developed $P^4L$ prototype and this workflow will be now explained.

In the example of figure 3, ML is used for automatically grouping photos and as, an initial training data, it is used the manual label (by the user) of a set of photos. So, in this example, the problem to be solved with ML is a (images) classification problem. In this example ML use case, it is utilized the concept of Transfer Learning, where a base model developed for a generic task is reused as the starting point for a model of a second task. This type of learning is more appropriate in devices with limited resources, such as current smartphones, compared to full model training.

In this specific example, n=5 and the parameters (weights) of the local ML model of users A ($M_A$), B($M_B$) and C($M_C$) would be respectively (this is only an illustrative non-limitative example, and any other values could be used):

$$W_A: [0.35634, 0.62102, 0.42149, 0.91223, 0, 11]$$

$$W_B: [0.334, 0.642, 0.52149, 0.85231, 0.1512]$$

$$W_C: [0.31244, 0.68245, 0.49291, 0.88411, 0.12563]$$

These parameter values may be the initial values or the values after some training (or updating).

In this case, it is supposed that user A is the synergy initiator. As previously explained, the workflow would be as it follows: (31) user A encrypts the parameters of its local model $M_A$ ($W_A$) with a public key of A, selects a peer B (this can be done by any mechanism, for example, scanning RF signals to find a nearby user device, that is, an user device which is within a predetermined maximum distance from the user device A) and sends a message including the encrypted $W_A$ to user device B. As previously explained, said message can include other useful synergy information as the public key of A, the maximum number of remaining synergy participants and the current address/ID list of synergy participants).

Then user B receives the message from user A, user B (32) homomorphically adds the parameters ($W_B$) of its local model, discovers user C and sends a message including the encrypted added parameters to user C (and, optionally, user device B informs user device A that a successful transmission has been made). This will be repeated once and again until the maximum number of synergy participants is reached or any other ending condition (for example, that a participant cannot discover any new participants, or a participant cannot successfully transmit a message to other participants).

In this example it is supposed that user C is the last participant of the synergy. Then user C homomorphically adds the parameters ($W_C$) of its local model and sends the encrypted added parameter to user device A, to end synergy (33). Then user device A decrypts and aggregates result (34) and shares the aggregated parameters with the rest of participants in the synergy. Then each participant re-evaluates the accuracy of the updated model and uses the updated model if the accuracy is higher compared to the old model. In figure 3, it is supposed that the accuracy is higher for all the participants and that's why all the participants A, B and C update their models with the aggregated parameters, that is, they use the updated model ($M'_A$, M'B, $M'_C$).

For the prototype, as a base model, MobileNetV2 was used (see for example "MobileNetV2: Inverted Residuals and Linear Bottlenecks Mark Sandler" by Andrew Howard, Menglong Zhu, Andrey Zhmoginov, and Liang-Chieh Chen. 2018) pre-trained with an image dataset (as for example ImageNet or any other) with image size 224x224. As a head model, a single dense layer with a total of 2,007,072 trainable parameters distributed in 32 units has been used, followed by softmax activation (SGD; Stochastic Gradient Descent, optimizer with 0.003 learning rate). As a dataset for model training and testing, CIFAR-10 was used (but any other could have been used), equally split and distributed across all users. Parameter values used in other FL works with CIFAR-10 were applied: 20 samples per batch, 30 epochs and 200 samples per user. This is only a non-limitative example and other techniques, datasets or parameter values could have been applied.

For the discovery of synergy peers, any known discovery/selection method could be used. For example, the proximity and cross-device communication existing capabilities of mobile devices. In an embodiment it is used the Nearby Connections API (see for example Google Developers. Proximity and cross device communication. https:// developers.google.com/nearby, 2020).

For the private aggregation part, any homomorphic encryption technique (preferably partial) could be used. The prototype is based on the Paillier cryptosystem and, for this specific prototype, the homomorphic encryption library developed by Morten Dahl, Mario Cornejo, Mathieu Poumeyrol, Omer Shlomovits, Roman Zeyde, and Gary Benattar. "Pailiier hommorphic encryption" (https://github.com/ mortendahl/rust-paillier) was used. While any implementation of the Paillier cryptosystem could work, this library was chosen because it allows homomorphic operations on packed ciphertexts. More specifically, contrary to traditional Paillier implementations that produce large and many ciphertexts - one per encrypted value:

Message = [Ciphertxt1, Ciphertxt2, Ciphertxt3] = [Enc(key, value1), Enc(key, value2), Enc(key, value3)]

in this specific library: (i) a vector of plaintext values can be encrypted, instead of a single value:

Message' = Ciphertxt123 = Enc(key, [value1, value2, value3])

and (ii) vector additions within the ciphertext are supported. Such a feature significantly improves the performance of $P^4L$ especially for large ciphertexts and increases systems throughput.

To further improve performance, a compression algorithm has been used (for example gzip algorithm or any other) to compress the packed ciphertexts.

The crypto library has been implemented using Rust programming language because:

(i) it provides cross-device capabilities, (ii) its performance as compared with Java, C and Go. To work with big numbers, the high-performance multiple-precision Rust library of Arithmetic in Multiple Precision (RAMP) has been used. This is only a non-limitative example and other HE techniques, libraries and programming language could be used in other embodiments.

In summary, it is proposed a privacy preserving peer-to-peer ML method and system which provide, among others, the following advantages:

- Fully distributed peer-to-peer ML system for infrastructure-less setups.
- Collaborative model training without the need for trusting any fellow peer or centralized authority.
- Privacy preserving approach based on homomorphic encryption that does not impact the accuracy of the final model.
- Capabilities for running the service on mobile phones or low-resources devices.
- Comparable (or even better) results to other popular privacy preserving more complex approaches such as Federated Learning.
- Demonstrated robustness against adversarial scenarios or other similar attacks.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for improving Machine Learning, ML, comprising the following steps:

   a) A first user device initiating the formation of a synergy group by: discovering another user device and sending to said discovered user device a synergy information message, said message comprising a set of parameters of a local ML model of the first user device encrypted with an homomorphic encryption algorithm, information about the homomorphic encryption algorithm and a list of current user devices in the synergy group including identification information of the first user device; and going to step b);
   b) A user device receiving the synergy information message updating the received synergy information message by: adding, to the set of encrypted parameters included in the received synergy information message, a set of parameters of a local ML model of said user device, encrypted using the same homomorphic encryption algorithm used by the first user device and adding identification information of the user device receiving the message to the list of current user devices in the synergy group included in the received synergy information message; and going to step c);
   c) If a stop condition is not met, the user device receiving the synergy information message discovering another user device and sending to the discovered user device the updated synergy information message and going to step b); otherwise sending to the first user device the updated synergy information message and going to step d);

d) The first user device decrypting the received encrypted set of parameters in the synergy information message, calculating an aggregated set of parameters based on the decrypted set of parameters and sending said aggregated set of parameters to the user devices in the synergy group.

2. A method according to any of the previous claims where the homomorphic encryption algorithm used is a public key-private key algorithm and where step a) comprises: encrypting each parameter of the local ML model of the first user device with a public key, $pk_A$, of the first user device, and where the information about the homomorphic encryption algorithm used included in the synergy information message comprises the public key, $pk_A$ and where in step b) the set of parameters of the local ML model of the user device receiving the synergy information message are encrypted using the public key of the first user device $pk_A$.

3. A method according to any of the previous claims where in steps a) and c) the user device encrypts the updated synergy information message with a private key of the user device before sending it to the discovered user device.

4. A method according to any of the previous claims where the aggregated set of parameters is an average of the decrypted set of parameters.

5. A method according to any of the previous claims where the user device discovering is made by scanning radiofrequency, RF, signals to find a nearby user device.

6. A method according to any of the previous claims where the synergy information message further comprises: a maximum number of remaining user devices participating in the synergy group.

7. A method according to claim 6, where in step b) the synergy information message is further updated by: subtracting 1 to the maximum number of remaining user devices participating in the synergy group included in the synergy information message.

8. A method according to any of the previous claims where in step c), after successfully forwarding to the discovered user device the updated synergy information message, the user device notifies said success to the user device it has received the synergy information message from.

9. A method according to any of the previous claims where the stop condition is met if a maximum number of user devices participating in the synergy group has been reached.

10. A method according to any of the previous claims where the stop condition is met if a maximum number of user devices participating in the synergy group has been reached or if a predetermined time has passed since the user device receiving the synergy information message sends an updated synergy information message to another user device without receiving a success notification.

11. A method according to any of the previous claims, where the method further comprises: e) each of the user devices in the synergy group updating its local ML model with the aggregated set of parameters received, if accuracy of the updated ML model on its local data is higher than accuracy of its previous local model.

12. A system for improving ML, comprising:

- a set of user devices configured to communicate through one of more communications networks between them,
- where a first user device of the set is configured to:

initiate the formation of a synergy group by: discovering another user device of the set and sending to said discovered user device a synergy information message, said message comprising a set of parameters of a local ML model of the first user device,
encrypted with an homomorphic encryption algorithm and information about the homomorphic encryption algorithm and a list of current user devices in the synergy group including identification information of the first user device; and

- where a user device of the set receiving a synergy information message is configured to:

• update the received synergy information message by: adding, to the set of homomorphically encrypted parameters included in the received synergy information message, a set of parameters of a local ML model of said user device, encrypted using the same homomorphic encryption algorithm used by the first user device and adding identification information of the user device receiving the message to the list of current user devices in the synergy group included in the received synergy information message;

• determine if a stop condition is met and if so, it is configured to send to the first user device the updated synergy information message, otherwise it is configured to discover another user device of the set and send to the discovered user device the updated synergy information message;

- where the first user device is further configured to, when it receives an updated synergy information message: decrypt the received encrypted set of parameters, calculate an aggregated set of parameters based on the decrypted set of parameters and send said aggregated set of parameters to the user devices in the synergy group.

13. A non-transitory digital data storage medium for storing a computer program which comprises instructions causing a computer executing the program to perform the method according to any of the claims 1-11.

FIG. 1

(1) Discover B and initiate synergy:

- initiator's (user A) public key
- Encrypted parameters of $M_A$
- Current participants: L

(2a) Homomorphically add parameters of $M_B$ and discover C

(2b) Notification beacon

(3a) Homomorphically add parameters of $M_C$ and send to A to end synergy

(4) - Decrypt result
   - Compute ZKP and
   - Compute aggregate

(3b) Notification beacon

(5) Share aggregated parameters

Re-evaluate accuracy and update $M_A$

Re-evaluate accuracy and update $M_B$

Re-evaluate accuracy and update $M_C$

$M'_A$

$M'_B$

$M'_C$

FIG. 2

EP 4 164 172 A1

FIG. 3

Europäisches
Patentamt

European
Patent Office

Office européen
des brevets

# EUROPEAN SEARCH REPORT

Application Number

EP 21 38 2895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL FELLOWS ET AL: "Kid Krypto", 16 August 1992 (1992-08-16), ADVANCES IN CRYPTOLOGY – CRYPTO. SANTA BARBARA, AUG. 16 – 20, 1992; [PROCEEDINGS OF THE ANNUAL INTERNATIONAL CRYPTOLOGY CONFERENCE], BERLIN, SPRINGER, DE, PAGE(S) 371 – 389, XP019193981, ISBN: 978-3-540-57340-1 | 1,3-13 | INV. H04L9/00 |
| Y | * section 2.3 * | 2 | |
| Y | LE TRIEU PHONG ET AL: "Privacy-Preserving Deep Learning via Additively Homomorphic Encryption", IACR, INTERNATIONAL ASSOCIATION FOR CRYPTOLOGIC RESEARCH , vol. 20180104:045638 1 August 2017 (2017-08-01), pages 1-18, XP061034574, Retrieved from the Internet: URL:http://eprint.iacr.org/2017/715.pdf [retrieved on 2017-08-01] * section 5.2 * | 2 | |

TECHNICAL FIELDS SEARCHED (IPC)

H04L

The present search report has been drawn up for all claims

| Place of search | Date of completion of the search | Examiner |
|---|---|---|
| Munich | 16 March 2022 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREW HOWARD ; MENGLONG ZHU ; ANDREY ZHMOGINOV ; LIANG-CHIEH CHEN.** *MobileNetV2: Inverted Residuals and Linear Bottlenecks Mark Sandler,* 2018

- **GOOGLE DEVELOPERS.** *Proximity and cross device communication,* 2020, https:// developers.google.com/nearby